# EUROPÄISCHE PATENTSCHRIFT

(11) **EP 2 174 872 B1**
(45) Veröffentlichungstag und Bekanntmachung des Hinweises auf die Patenterteilung: **04.07.2012**
(21) Anmeldenummer: 09010425.8
(22) Anmeldetag: 13.08.2009
(51) Int. Cl.: B65B 43/46, B65B 59/00, B65G 47/08

(54) **Fördereinrichtung für Verpackungen, insbesondere für Tabakbeutel**
Transport device for packages, in particular for tobacco pouches
Dispositif de transport pour emballages, notamment pour sachets de tabac

(30) Priorität: 13.10.2008 DE 102008051006; 18.03.2009 DE 102009013679
(43) Veröffentlichungstag der Anmeldung: 14.04.2010
(73) Patentinhaber: Dittrich, Andreas, 27308 Kirchlinteln (DE)
(72) Erfinder: Dittrich, Andreas, 27308 Kirchlinteln (DE)
(74) Vertreter: Jabbusch, Matthias

(56) Entgegenhaltungen:
- EP-A- 0 999 137
- EP-A- 1 167 210
- DE-A1-102006 028 796
- US-A- 4 423 583

## Beschreibung

Die Erfindung bezieht sich auf eine Fördereinrichtung für Verpackungen, insbesondere für Tabakbeutel, mit zumindest einem wenigstens eine Verpackung in vorbestimmter Lage haltenden Förderorgan.

Fördereinrichtungen vorbekannter Gattung, wie zum Beispiel Gurtförderer, werden eingesetzt, um insbesondere eine fertige Verpackung nacheinander verschiedenen Verarbeitungsstationen zuzuführen, wie einer Füllstation, Verschließstation oder dergleichen. Derartige Fördereinrichtungen, welche beispielsweise ein als Gurtband ausgebildetes Förderorgan für die zu bewegenden Verpackungen aufweisen, werden unter anderem in Abfüllanlagen der Lebensmittelindustrie eingesetzt.

Aus der EP 1 456 085 B1 ist eine Fördereinrichtung mit einem als Endlos-Gurtband ausgebildeten Förderorgan bekannt, an dem die zu fördernden Verpackungen, welche in der Regel einen gleichmäßigen Abstand zueinander aufweisen, festgelegt sind. Die Abstände der Verpackungen auf dem Förderorgan entsprechen dabei üblicherweise den Abständen zwischen den verschiedenen, entlang der Fördereinrichtung angeordneten Stationen für die Ver- oder Bearbeitung der daran festgelegten Verpackungen. Das eingesetzte, um Umlenkrollen geführte Endlos-Gurtband ist häufig aus einem elastischen Gurtstoff ausgebildet.

Die Verwendung eines derartigen Förderorgans hat, aufgrund der hohen Taktung der bei der Verarbeitung insbesondere intermittierend durchgeführten Förderbewegung der Verpackungen den Nachteil, dass während der dynamischen Bewegungsphase des Förderorgans durch das ständige Anfahren und Anhalten eine zyklisch wiederkehrende Längenänderung des als Gurtband ausgebildeten Förderorgans (Gummibandeffekt) eintritt. Die Längenänderung des Förderorgans hat wiederum zur Folge, dass sich der Abstand zwischen den beispielsweise über Aufnahmen festgelegten Verpackungen vergrößert und sich bei deren Verarbeitung somit Abweichungen zwischen den in der Regel deckungsgleich zueinander ausgerichteten Verpackungen und den die Verpackungen verarbeitenden Stationen einstellen können. Das kann gegebenenfalls zu Störungen bei der Verpackungsverarbeitung führen. Insbesondere durch das undefinierte Verhalten beim Anhalten des während der Zugbewegung auf einer Seite auf Zugspannung beanspruchten Förderorgans ist dann für eine Entlastung des Förderorgans zu sorgen, was durch das Zurückdrehen der antreibenden Umlenkrolle um ein vorbestimmtes Winkelmaß erfolgt. Dadurch entsteht jedoch ein relativ hoher regelungstechnischer Aufwand an der Fördereinrichtung, der sich zudem nachteilig auf die Prozesssicherheit auswirkt.

Der Erfindung liegt die Aufgabe zugrunde, eine Fördereinrichtung der vorbezeichneten Gattung dahingehend zu verbessern, dass stets eine relativ hohe und dauerhafte Prozesssicherheit bei der Verarbeitung der Verpackungen gewährleistet ist.

Die Lösung der Aufgabe erfolgt erfindungsgemäß durch eine Fördereinrichtung mit den Merkmalen des Patentanspruches 1. Vorteilhafte Weiterbildungen und Ausgestaltungen der Erfindung sind in den Ansprüchen 2 bis 16 angegeben.

Bei einer Fördereinrichtung für Verpackungen, insbesondere Tabakbeutel, mit zumindest einem wenigstens eine Verpackung in vorbestimmter Lage haltenden Förderorgan, ist nach der Erfindung vorgesehen, dass das Förderorgan mindestens zwei in Förderrichtung feststehende Verpackungshalter und wenigstens einen Umsetzer für die zu fördernden Verpackungen aufweist, wobei der Umsetzer mit mindestens einem Antriebsmittel für eine zwangsgeführte Bewegung zwischen den feststehenden Verpackungshaltern entlang einer vorbestimmten Bahn ausgerüstet ist.

Mit Hilfe eines derartig erfindungsgemäß ausgebildeten Förderorgans, welches eine Vielzahl von in einer Reihe hintereinander angeordneten, feststehenden Verpackungshaltern aufweisen kann, und entlang denen mit Hilfe wenigstens eines Umsetzer eine jeweilige Verpackung von einem Verpackungshalter zu einem jeweils nachfolgenden Verpackungshalter umgesetzt bzw. weiter bewegt wird, ist mit Vorteil stets eine relativ hohe Prozesssicherheit bei der Verpackungsverarbeitung gewährleistet. Der Umsetzer wird bevorzugt mittels eines Antriebsmittels entlang einer umlaufenden Bahn bewegt, so dass ein vorgegebener Bewegungsablauf für einen die Verpackung umsetzenden Umsetzer gegeben ist. Die umlaufende Bahn, auf der sich der Umsetzer bewegt, kann insbesondere in einer vertikal verlaufenden, parallel zur Förderrichtung ausgerichteten Ebene liegen. Für eine sichere Aufnahme der Verpackungen können sowohl am Verpackungshalter als auch am Umsetzer beispielsweise nach oben geöffnete Fachaufnahmen vorgesehen sein, die derart ausgestaltet sind, dass beim aneinander Vorbeiführen der Fachaufnahmen eines Verpackungshalters und des Umsetzers die Verpackung in Abhängigkeit zur Bewegungsrichtung des Umsetzers automatisch entweder von diesem übernommen oder von diesem an einen unmittelbar angefahrenen Verpackungshalter übergeben wird.

Mit Vorteil ist nach einer Weiterbildung der Erfindung vorgesehen, dass zwei, einander unmittelbar benachbarten Verpackungshaltern jeweils ein zwangsbewegter Umsetzer zugeordnet ist. Durch den gleichzeitigen Einsatz mehrere Umsetzer lässt sich die Fördergeschwindigkeit der Verpackungen mittels der erfindungsgemäßen Fördereinrichtung erhöhen, wodurch mit Vorteil gleichzeitig die Verarbeitungsgeschwindigkeit der Verpackungen in einer Abfüllanlage beschleunigt ist. Ein sich jeweils ausschließlich nur zwischen zwei einander benachbarten Verpackungshaltern hin- und herbewegender Umsetzer führt dabei vorzugsweise zeitgleich eine jeweilige, insbesondere vertikal auszuführende Übernahme- bzw. Übergabebewegung von wenigstens einer Verpackung aus.

Jeder Verpackungshalter und jeder Umsetzer ist mit wenigstens zwei Aufnahmen für jeweils eine Verpackung ausgerüstet, wodurch sich die Taktung für die Verarbeitung der Verpackungen trotz gleichbleibender Fördergeschwindigkeit mit Vorteil zumindest verdoppeln lässt. Es ist ebenfalls denkbar, an jedem Verpackungshalter und jedem Umsetzer mehr als zwei Aufnahmen für die Verpackungen vorzusehen.

Mindestens einer der Umsetzer weist zumindest einen Schlitten auf, welcher über eine Linearführung aufgenommen ist. Mit dem Einsatz eines Schlittens, welcher entlang einer insbesondere parallel zur Förderrichtung verlaufenden Führungsschiene der Linearführung schiebebeweglich gehalten ist, lässt sich eine vorteilhaft geführte Bewegung eines jeweiligen Umsetzers zwischen den jeweils anzufahrenden Verpackungshaltern erzielen. Bevorzugt weisen die äußeren Umsetzer einen schiebebeweglich geführten Schlitten auf. Sämtliche dazwischen befindlichen Umsetzer sind beispielsweise an einem die äußeren Umsetzer fest miteinander koppelnden Träger in einem gleichmäßigen Abstand zueinander aufgenommen. Das Antriebsmittel, welches zumindest einen Servomotor umfassen kann, bewegt somit gleichzeitig mehrere Umsetzer stets zielgenau entlang der Führungsschiene, so dass mit Vorteil eine positionsgenaue Übernahme bzw. Übergabe einer jeweiligen Verpackung von einem Verpackungshalter an den Umsetzer bzw. vom Umsetzer an den nachfolgenden Verpackungshalter gewährleistet ist. In diesem Zusammenhang können beispielsweise die Aufnahmen der Umsetzer über eine Drehführung aufgenommen sein, wobei die insbesondere fachartigen, nach oben offenen Aufnahmen bei der Übernahme einer jeweiligen Verpackung eine aufwärts gerichtete Bewegung ausführt und bei der Übergabe einer jeweiligen Verpackung an einen jeweils nachfolgenden Verpackungshalter eine abwärts gerichtete Bewegung vollzieht.

Darüber hinaus kann vorgesehen sein, dass jede Aufnahme mittels einer Schiebeführung in einer horizontalen Ebene und etwa quer zur Förderrichtung der Verpackungen beweglich gehalten ist. Sowohl die Aufnahmen an einem beweglich gehaltenen Umsetzer als auch die Aufnahmen für die Verpackungen an den feststehenden Verpackungshaltern des Förderorgans lassen sich somit gezielt quer zur Förderrichtung der Verpackungen verstellen. Dadurch ist eine vereinfachte Übernahme oder Übergabe einer jeweiligen Verpackung vom Verpackungshalter zum Umsetzer bzw. vom Umsetzer zum Verpackungshalter möglich. Das Vorschieben der Verpackungen in Förderrichtung ist somit nunmehr mit einer ausschließlich geradlinig intermittierenden Bewegung auf etwa einem gleichmäßigen Höhenniveau verbunden und erfolgt bei ausgefahrenen Aufnahmen der Umsetzer und gleichzeitig eingefahrenen bzw. zurückgefahrenen Aufnahmen der Verpackungshalter.

Die Aufnahmen sind mit einem Antriebsorgan für eine Bewegung in Richtung der Schiebeführung gekoppelt, wodurch die etwa quer zur Förderrichtung der Verpackungen vorgenommene Versatzbewegung der Aufnahmen für die Verpackungen der Verpackungshalter und der Umsetzer mit Vorteil auf relativ einfache Weise aufeinander abgestimmt werden kann. Jedes der Antriebsorgane, welche die voneinander getrennt vorzunehmenden Versatzbewegungen der Verpackungsaufnahmen durchführen, kann diesbezüglich mit einer Steuerungseinrichtung verbunden sein, über die eine vorteilhafte Positionsregelung der unterschiedlich anzusteuernden Aufnahmen auf vorteilhafte Weise erfolgt. Die Aufnahmen der Umsetzer und die Aufnahmen der Verpackungshalter bilden vorzugsweise jeweils eine Gruppe von stets gemeinsam zu versetzenden Verpackungs-Aufnahmen. Das die Aufnahmen an den Umsetzern versetzende Antriebsorgan und das Antriebsmittel für den Schlitten eines der Umsetzer können zudem insbesondere Teil einer als Koppelkinematik ausgebildeten Antriebseinheit sein.

Eine Weiterbildung der Erfindung sieht vor, dass jede Aufnahme für die Verpackungen mindestens einen mit der Außenseite der Verpackung in Kontakt zu bringenden Haltekrafterzeuger aufweist. Die insbesondere an einer jeweiligen Verpackungsaufnahme hängend aufgenommene Verpackung lässt sich mit Hilfe eines Haltekrafterzeugers in einer für die Weiterverarbeitung der Verpackung vorgegebenen Lage stets sicher festlegen. Speziell bei der Übernahme durch den Umsetzer bzw. bei der Übergabe der Verpackung an den nächstfolgenden Verpackungshalter kann durch den Haltekrafterzeuger eine ausreichende Haltekraft bereit gestellt werden, so dass während der aufeinander folgenden Verarbeitungsschritte an den Verpackungen stets eine optimale Prozesssicherheit gewährleistet ist.

Der Haltekrafterzeuger ist vorzugsweise ein einen Minderdruck an der Verpackungsaußenseite erzeugender Sauger, wodurch eine konstruktiv vorteilhafte Ausgestaltung eines Haltekrafterzeugers geschaffen ist. Bevorzugt weist die, eine Verpackung haltende Aufnahme eines Umsetzers drei Sauger und die Aufnahme eines Verpackungshalters zwei Sauger auf, wodurch die an der Außenseite der Verpackung jeweils angreifenden Haltekräfte beabstandet zueinander angreifen und somit eine verbesserte Lagesicherung der Verpackung an einem jeweiligen Verpackungshalter gewährleistet ist.

Jede Aufnahme weist zudem zumindest einen Sensor zur Detektion einer sich daran befindlichen Verpackung auf, wodurch auf vorteilhafte Weise sichergestellt ist, dass ein an der Aufnahme für die Verpackungen angeordneter Haltekrafterzeuger nicht unnötig mit einer den Minderdruck am Haltekrafterzeuger bereitstellenden Unterdruckleitung medienleitend verbunden ist. Diesbezüglich weist jeder, vorzugsweise als Sauger ausgebildeter Haltekrafterzeuger ein als Ventil ausgebildetes Stellorgan zum Verschließen der daran angeschlossenen Unterdruckleitung auf, wobei das Stellorgan bei der Detektion einer fehlenden Verpackung durch den Sensor automatisch geschlossen bleibt.

Nach einer anderen Weiterbildung der Erfindung ist vorgesehen, dass mindestens eine der Aufnahmen in ihrer Arbeitshöhe verstellbar ausgebildet ist. Mit Hilfe bevorzugt eines in seiner Arbeitshöhe verstellbaren Paares von Verpackungsaufnahmen lassen sich auf vorteilhafte Weise unterschiedliche Längen der über die erfindungsgemäß ausgebildete Fördereinrichtung transportierten Verpackungen ausgleichen, wobei bestimmte Referenzpunkte, wie zum Beispiel die Einfüllöffnung an einer Verpackung auf gleichem Niveau gehalten oder in eine Nullstellung gebracht werden. Zudem kann auch das Verschließen unterschiedlich ausgebildeter Tabakbeutel, wie zum Beispiel von Standbeuteln oder Wickelbeuteln, problemlos vorgenommen werden, wobei durch die in ihrer Arbeitshöhe verstellbare Verpackungsaufnahme durch die damit einhergehende Höhenänderung der Verpackungen die Haltekrafterzeuger einer nachfolgenden Verpackungsaufnahme an einem anderen Flächenbereich der Verpackung angreifen. Die in ihrer Arbeitshöhe verstellbar ausgebildeten Aufnahmen können sowohl an einem feststehenden Verpackungshalter als auch an einem beweglich geführten Umsetzer ausgebildet sein.

Bei einer Vorrichtung zum Handhaben von Verpackungen, insbesondere von Tabakbeuteln, mit zumindest einer Magazinstation für die Verpackungen, mit wenigstens einer Füllstation zum Befüllen der Verpackungen mit einem Füllgut, mit mindestens einer Station zum Verschließen der befüllten Verpackungen und wenigstens einer Entnahmestation für die verschlossenen Verpackungen, und mit mindestens einer Fördereinrichtung für die von Station zu Station zu bewegenden Verpackungen, für die selbstständiger Schutz beantragt wird, ist erfindungsgemäß vorgesehen, dass die Fördereinrichtung ein Förderorgan mit einer Vielzahl in Förderrichtung feststehender Verpackungshalter aufweist, wobei zumindest jeder der Stationen mindestens einer der Verpackungshalter zugeordnet ist, und dass jeweils zwei einander benachbarten Verpackungshaltern ein zwangsbewegter Umsetzer für die zu fördernden Verpackungen zugeordnet ist, welcher zwischen den feststehenden Verpackungshaltern entlang einer vorgegebenen Bahn bewegbar ist.

Eine derartig erfindungsgemäß ausgebildete Vorrichtung zur Handhabung insbesondere von Tabakbeuteln weist eine Fördereinrichtung auf, deren in Förderrichtung feststehende Verpackungshalter den jeweiligen Stationen der Vorrichtung zugeordnet sind, so dass eine jeweils durch einen Verpackungshalter aufgenommene Verpackung stets zu einer jeweiligen Bearbeitungsstation, wie einer Füll- oder Verschließstation, vorteilhaft ausgerichtet und somit eine vorteilhaft einfache Handhabung einer zu verarbeitenden Verpackung beispielsweise während des Befüllens gewährleistet ist. Es ist selbstverständlich auch möglich, entlang der Fördereinrichtung an eine entsprechende Position weitere Bearbeitungsstationen, wie zum Beispiel einen Beutelöffner oder eine Wickelstation, in der erfindungsgemäßen Vorrichtung zu integrieren, um mit Hilfe der Vorrichtung die Verarbeitung der unterschiedlichsten Verpackungen vornehmen zu können. Selbstverständlich kann die an der Vorrichtung eingesetzte Fördereinrichtung ebenfalls alle weiteren Merkmale der Ansprüche 2 bis 10 aufweisen.

Zudem sieht die Erfindung vor, dass wenigstens zwei erfindungsgemäße Fördereinrichtungen an der Vorrichtung angeordnet sein können, deren Förderorgane etwa parallel zueinander verlaufende Förderrichtungen aufweisen. Mit dem Einsatz insbesondere zweier übereinander angeordneter Fördereinrichtungen lässt sich auf vorteilhafte Weise die Taktung bei der Handhabung bzw. Verarbeitung der Verpackungen verdoppeln, wodurch mit Hilfe einer derartigen Vorrichtung mit Vorteil eine entsprechende Steigerung der Produktivität erreicht wird. Zudem entsteht durch die bevorzugt übereinander angeordneten Fördereinrichtungen nur ein unwesentlich vergrößerter Platzbedarf für eine solch erfindungsgemäß ausgebildete Vorrichtung. Es ist selbstverständlich auch denkbar, die Fördereinrichtungen in einer insbesondere waagerecht verlaufenden Ebene nebeneinander anzuordnen. Es liegt des Weiteren im Rahmen der Erfindung, dass die zwangsbewegten Umsetzer der verschiedenen Förderorgane derart zueinander angeordnet sind, dass ein Versatz in den Bewegungsabläufen ausgebildet ist. Bei einem gleichzeitigen Betrieb beider Fördereinrichtung vollziehen die Umsetzer der verschiedenen, insbesondere übereinander angeordneten Förderorgane eine entgegengesetzte Bewegung zueinander in Längsrichtung der Fördereinrichtung, wodurch aus den Einzelbewegungen resultierende Kräfte und Schwingungen sich größtenteils gegenseitig aufheben. Damit ist ein vorteilhaft stabiler Lauf gewährleistet, der sich somit vorteilhaft auf das Eigenschwingverhalten der üblicherweise frei in einem Raum aufzustellenden Vorrichtung auswirkt. Die Bewegungsabläufe von zwei gleichzeitig betriebenen Fördereinrichtungen weisen dabei etwa einen 180 Grad Versatz auf. Selbstverständlich kann an Stelle eines gleichzeitigen Betriebes beider Fördereinrichtungen auch nur eine an der Vorrichtung ausgebildete Fördereinrichtung zum Einsatz kommen.

Jede der Fördereinrichtungen sind jeweils vorbestimmte, die Verpackungen bearbeitenden, funktionsgleichen Stationen zugeordnet. Somit ist an jeder der durch die Fördereinrichtung ausgebildeten Förderstrecke eine vollständige Be- bzw. Verarbeitung der Verpackungen durch die entlang der Förderstrecke angeordneten Bearbeitungsstationen sichergestellt. Ein ständiger Positionswechsel einer zwischen den verschiedenen Förderstrecken hin- und herbewegten Verarbeitungsstation lässt sich damit vermeiden und entsprechend hohe Taktungen bei der Fertigung von bis zu 180 Beuteln pro Minute erreichen. Es lassen sich über die verschiedenen Fördereinrichtungen und den zugeordneten Bearbeitungsstationen gleichzeitig zwei unterschiedliche Verpackungstypen, wie zum Beispiel Doppelwickelbeutel und Seitenfalten- bzw. Standbeutel, verarbeiten.

Bevorzugt sind funktionsgleiche Stationen in Förderrichtung des jeweiligen Förderorgans versetzt zueinander angeordnet. Insbesondere in ihrer Höhe einen relativ großen Platz benötigende Bearbeitungsstationen, wie zum Beispiel die Befüllstationen, sind einen geringen Höhenversatz zueinander aufweisend, mit Vorteil nebeneinander angeordnet, so dass die Abmaße der erfindungsgemäßen Vorrichtung in der Gesamthöhe nicht übermäßig ausfallen.

Darüber hinaus kann vorgesehen sein, dass den Fördereinrichtungen ein gemeinsames Magazin zugeordnet ist, aus dem die Verpackungen über beispielsweise eine Zuführeinrichtung dem vorderen Bereich der Fördereinrichtungen und somit dem ersten festen Verpackungshalter eines jeweiligen Förderorgans zugeführt werden.

Ausführungsbeispiele der Erfindung, aus denen sich weitere erfinderische Merkmale ergeben sind in der Zeichnung dargestellt. Es zeigen:

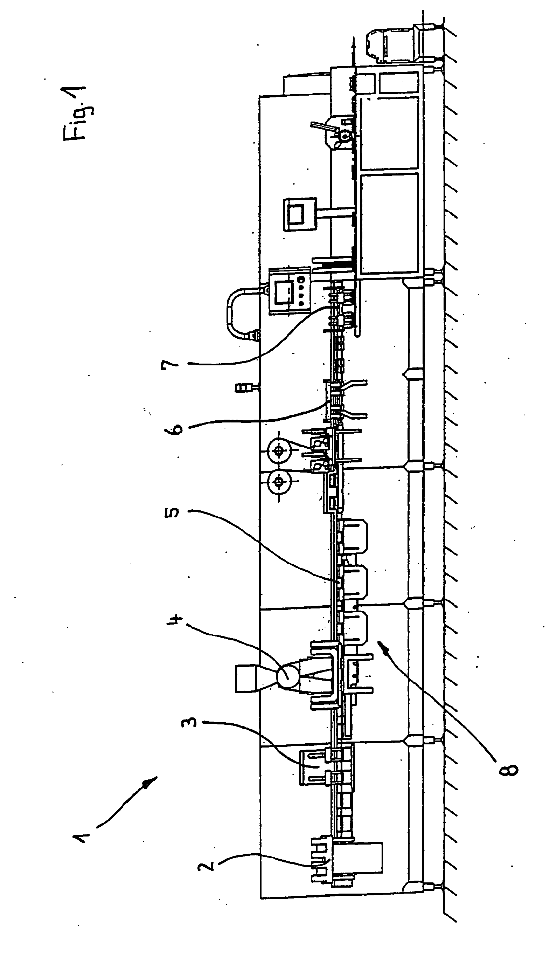

- Fig. 1:: eine Ansicht einer erfindungsgemäßen Vorrichtung zum Handhaben von Verpackungen;
- Fig. 2:: eine Ansicht einer erfindungsgemäßen Fördereinrichtung für Verpackungen in einer ersten Arbeitsstellung;
- Fig. 3:: eine perspektivische Ansicht der Fördereinrichtung nach Fig. 2 in einer zweiten Arbeitsstellung.
- Fig. 4:: eine Ansicht eines weiteren Ausführungsbeispiels einer erfindungsgemäßen Vorrichtung zur Handhabung von Verpackungen, und
- Fig. 5:: eine perspektivische Teilansicht der Fördereinrichtung nach Fig. 4.

Mit 1 ist eine Vorrichtung zum Handhaben von Verpackungen bezeichnet, welche zumindest eine Magazinstation 2 für Verpackungen, eine Beutelöffnungsstation 3, eine Einfüllstation 4, eine Verschließ- bzw. Wickelstation 5, 6 und eine Beutelentnahmestation 7 aufweist. Die Vorrichtung 1 weist des Weiteren eine Fördereinrichtung 8 zum Transport der in der Magazinstation 2 enthaltenen und entlang der insbesondere nacheinander angeordneten Stationen 3 bis 7 zu verarbeitenden Verpackungen auf.

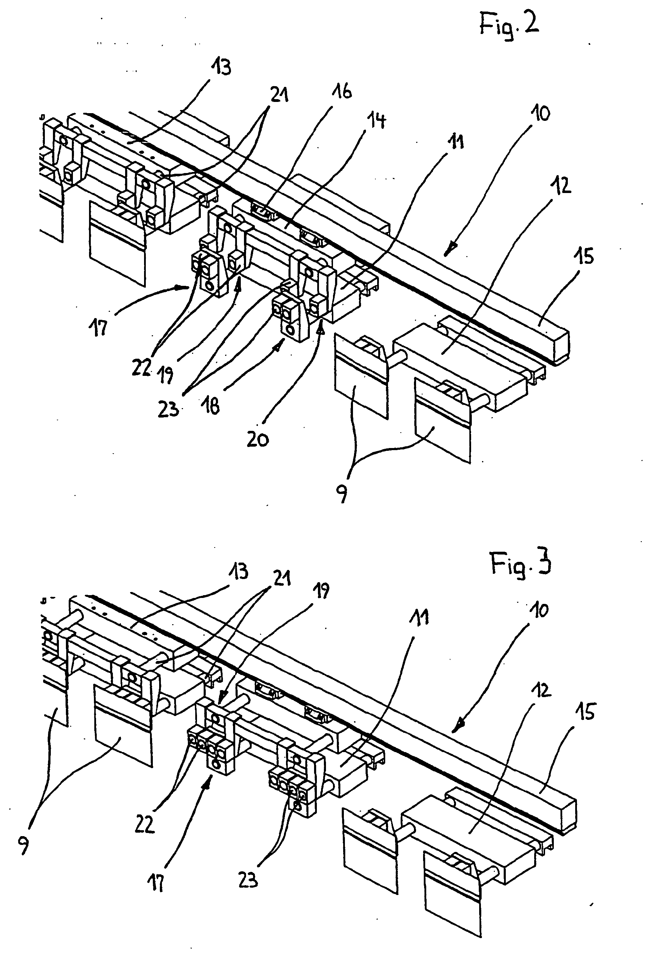

In Fig. 2 ist eine Detailansicht der Fördereinrichtung 8 in einer ersten Arbeitsstellung gezeigt. Die Fördereinrichtung 8 weist dabei zumindest ein mehrere Verpackungen 9 in vorbestimmter Lage festlegendes Förderorgan 10 auf, wobei das Förderorgan 10 aus mehreren in Förderrichtung feststehenden Verpackungshaltern 11, 12 und mehreren Umsetzern 13, 14 für die zu fördernden Verpackungen 9 ausgebildet ist. Wenigstens einer der Umsetzer 13, 14 weist einen entlang einer Linearführung 15 schiebebeweglich gehaltenen Schlitten 16 auf, wodurch sich ein jeweiliger Umsetzer 13, 14 parallel in Förderrichtung der Verpackungen 9 verschieben lässt. Für eine zwangsgeführte Bewegung der Umsetzer 13, 14 ist mindestens ein, nicht dargestelltes Antriebsmittel vorgesehen, welches die Umsetzer 13, 14 entlang einer vorbestimmten Bahn zwischen den feststehenden Verpackungshaltern 11, 12 hin- und herbewegt. Jeder Verpackungshalter 11, 12 und jeder Umsetzer 13, 14 ist mit wenigstens zwei Aufnahmen 17, 18, 19, 20 für die Verpackungen ausgerüstet, wobei jede Verpackungs-Aufnahme 17 bis 20 mittels einer Schiebeführung 21 in einer horizontalen Ebene und etwa quer zur Förderrichtung der Verpackung 9 beweglich gehalten ist. Die Aufnahmen 17, 18 der Verpackungshalter 11, 12 und die Aufnahmen 19, 20 für die Verpackungen der Umsetzer 13, 14 bilden insbesondere Gruppen von Verpackungs-Aufnahmen, welche jeweils mit einem wiederum nicht dargestellten Antriebsorgan für eine Versatzbewegung in Richtung der Schiebeführung 21 gekoppelt sind, so dass eine voneinander unabhängige Bewegung der Verpackungsaufnahmen 17, 18 und der Verpackungsaufnahmen 19, 20 sichergestellt ist.

Fig. 3 zeigt die erfindungsgemäße Fördereinrichtung 8 in einer zweiten Arbeitsstellung, wobei die Aufnahmen 17 bis 20 für die Verpackungen der Verpackungshalter 11, 12 und der Umsetzer 13, 14 in einer Ebene angeordnet sind. In dieser Arbeitsstellung erfolgt die Übernahme der Verpackungen 9 durch einen jeweiligen Umsetzer 13, 14, wobei über die Haltekrafterzeuger 22, 23 aufweisenden Aufnahmen 19, 20 der Umsetzer 13, 14 eine an der Außenseite einer jeweiligen Verpackung 9 wirkende Haltekraft erzeugt ist. Auch die Aufnahmen 17, 18 der Verpackungshalter 11, 12 weisen derartige, insbesondere als Sauger ausgebildete Haltekrafterzeuger 22, 23 auf, die bei Übernahme der Verpackung durch den Umsetzer drucklos gestellt werden und somit ihre Haltekraft verlieren. Nunmehr werden, was nicht mehr dargestellt ist, die Aufnahmen 17, 18 der Verpackungshalter 11, 12 in eine hintere Position verschoben und beispielsweise der Umsetzer 14 kann mit seiner Förderbewegung vom Verpackungshalter 11 zum nachfolgenden Verpackungshalter 12 beginnen. Die an den als Sauger ausgebildeten Haltekrafterzeugern 22, 23 medienleitend angeschlossenen Druckleitungen sind zur Vereinfachung dabei nicht abgebildet. Gleiche Bauteile sind mit gleichen Bezugszahlen bezeichnet.

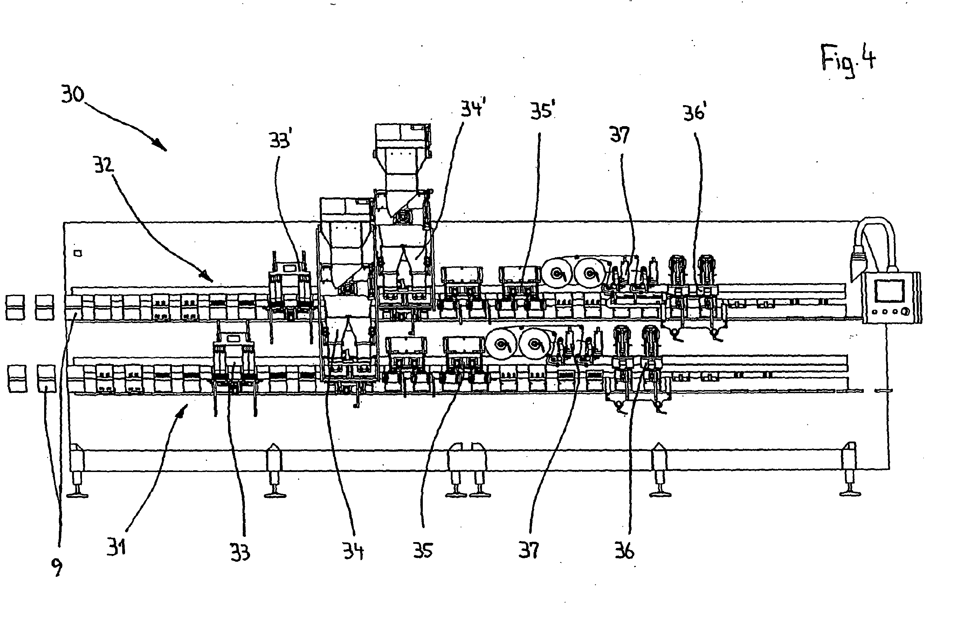

In Fig. 4 ist ein weiteres Ausführungsbeispiel für eine erfindungsgemäße Vorrichtung 30 zum Handhaben von Verpackungen gezeigt, die insbesondere zwei, parallel übereinander angeordnete Fördereinrichtungen 31, 32 aufweist. Jeder mittels der Fördereinrichtung ausgebildeten Förderstrecke sind bestimmte, funktionsgleiche Bearbeitungsstationen zugeordnet. Entlang der Fördereinrichtungen 31, 32 sind zumindest Beutelöffnungsstationen 33, 33', Einfüllstationen 34, 34', Verschließstationen 35, 35' und Wickelstationen 36, 36' angeordnet, mittels denen sich versandfertige Verpackungen erzeugen lassen. Zum Bestücken der Fördereinrichtungen 31, 32 mit entsprechend zu verarbeitenden Verpackungen 9 kann beispielsweise eine einzige, nicht dargestellte Magazinstation vorgesehen sein, aus der die Verpackungen entsprechend den jeweiligen Fördereinrichtungen 31, 32 zugeführt werden. Zudem können zwischen den Verschließ- und den Wickelstationen 35, 35', 36, 36' jeweils Klebestationen 37, 37' angeordnet sein, die vor dem Wickeln der bereits verschlossenen Verpackung einen Verschluss-Klebestreifen an der Verpackungsklappe anbringen.

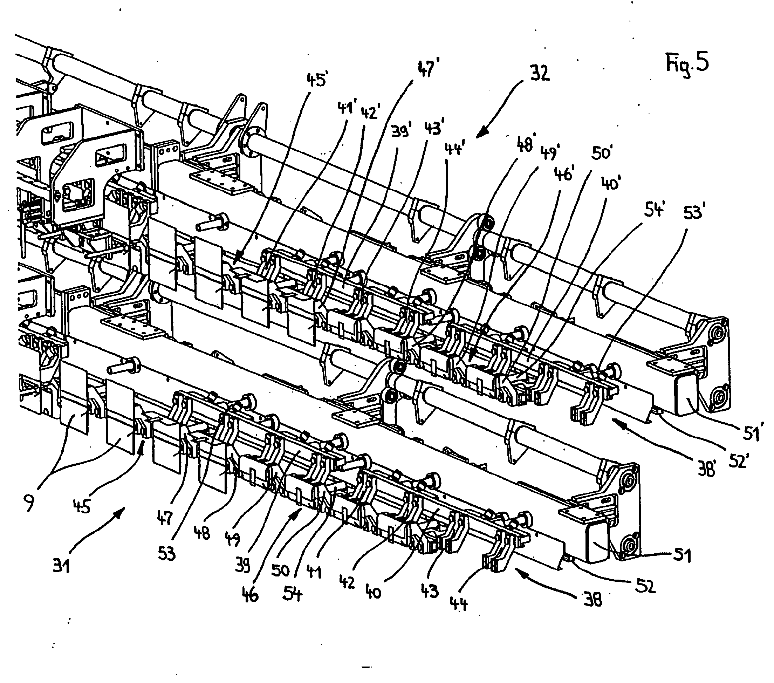

In Fig. 5 ist eine vergrößerte Teilansicht der Fördereinrichtung 31, 32 nach Fig. 4 abgebildet, welche in einer senkrecht verlaufenden Ebene übereinander angeordnet sind. Die mittels der Fördereinrichtungen 31, 32 ausgebildeten Förderstrecken verlaufen dabei bevorzugt parallel zueinander. Die Förderorgane 38, 38' der übereinander angeordneten Fördereinrichtungen weisen ebenfalls eine Vielzahl von in Förderrichtung feststehenden Verpackungshaltern 39, 39', 40, 40' mit Aufnahmen 41, 41', 42, 42', 43, 43', 44, 44', für die Verpackungen und sich zwischen vorbestimmten Verpackungshaltern hin- und herbewegende Umsetzer 45, 45', 46, 46' mit entsprechenden Aufnahmen 47, 47', 48, 48', 49, 49', 50, 50' für die Verpackungen auf. In diesem Ausführungsbeispiel bewegen sich die Umsetzer ebenfalls in einer waagerechten Ebene, wobei dessen Hauptbewegungsrichtungen jeweils in einem Winkel von 90 Grad zueinander verlaufen. Insbesondere die Aufnahmen 47 - 50' für die Verpackungen jedes Umsetzers 45, 45', 46, 46' werden dabei bevorzugt auf einer nahezu rechteckigen Bahn in der Horizontalen bewegt. Jeder Umsetzer ist vorzugsweise mit vier Verpackungs-Aufnahmen 47 - 50' ausgerüstet, wobei jede Aufnahme 47 - 50' bevorzugt mittels drei Haltekrafterzeugern ausgebildet ist. Die Aufnahmen 41 - 44 der feststehenden Verpackungshalter 39, 39', 40, 40' weisen jeweils zwei, insbesondere als Sauger ausgebildete Haltekrafterzeuger für die zu versetzenden Verpackungen 9 auf. In dieser Ausführung sind die beweglichen Umsetzer 45, 45', 46, 46' an sich nahezu über die gesamte Länge der erfindungsgemäßen Vorrichtung 30 erstreckenden Trägerbalken 51, 51' schiebebeweglich angeordnet, an deren Unterseiten jeweils eine Linearführung 52, 52' vorgesehen ist. Quer zur Förderrichtung der Verpackungen sind sowohl die Verpackungshalter 39, 39', 40, 40' als auch die Umsetzer 45, 45', 46, 46' mittels der Schiebeführungen 53, 53', 54, 54' beweglich aufgenommen. Somit führen die Verpackungshalter und die Umsetzer eine Versatzbewegung quer zur Förderrichtung aus und ermöglichen darüber den vorteilhaften Umsetzvorgang der Verpackungen von einem in Förderrichtung feststehenden Verpackungshalter zu einem der nachfolgenden Verpackungshalter.

## Patentansprüche

1. Fördereinrichtung für Verpackungen, insbesondere Tabakbeutel, mit zumindest einem wenigstens eine Verpackung in vorbestimmter Lage **haltenden Förderorgan,**
**dadurch gekennzeichnet,**
**dass** das Förderorgan (10, 38, 38') mindestens zwei in Förderrichtung feststehende Verpackungshalter (11, 12, 39, 39', 40, 40') und wenigstens einen Umsetzer (13, 14, 45, 45', 46, 46') für die zu fördernden Verpackungen (9) aufweist, wobei der Umsetzer (13, 14, 45, 45', 46, 46') mit mindestens einem Antriebsmittel für eine zwangsgeführte Bewegung zwischen den feststehenden Verpackungshaltern (11, 12, 39, 39', 40, 40') entlang einer vorbestimmten Bahn ausgerüstet ist.

2. Fördereinrichtung nach Anspruch 1, **dadurch gekennzeichnet, dass** zwei, einander unmittelbar benachbarten Verpackungshaltern (11, 12, 39, 39', 40, 40') jeweils ein zwangsbewegter Umsetzer (13, 14, 45, 45', 46, 46') zugeordnet ist.

3. Fördereinrichtung nach Anspruch 1 oder 2, **dadurch gekennzeichnet, dass** jeder Verpackungshalter (11, 12, 39, 39', 40, 40') und jeder Umsetzer (13, 14, 45, 45', 46, 46') mit wenigstens zwei Aufnahmen (17-20, 41-44', 47-50') für jeweils eine Verpackung (9) ausgerüstet ist.

4. Förderreinrichtung nach einem der Ansprüche 1 bis 3, **dadurch gekennzeichnet, dass** mindestens einer der Umsetzer (13, 14, 45, 45', 46, 46') zumindest einen Schlitten (16) aufweist, welcher über eine Linearführung (15, 52, 52') aufgenommen ist.

5. Fördereinrichtung nach Anspruch 4, **dadurch gekennzeichnet, dass** jede Aufnahme (17-20, 41-44', 47-50') mittels einer Schiebeführung (21, 53, 53', 54, 54') in einer horizontalen Ebene und etwa quer zur Förderrichtung der Verpackungen (9) beweglich gehalten ist.

6. Fördereinrichtung nach einem der Ansprüche 4 oder 5, **dadurch gekennzeichnet, dass** die Aufnahmen (17-20, 41-44', 47-50') für die Verpackungen mit einem Antriebsorgan für eine Versatzbewegung in Richtung der Schiebeführung (21) gekoppelt sind.

7. Fördereinrichtung nach einem der Ansprüche 4 bis 6, **dadurch gekennzeichnet, dass** jede Aufnahme (17-20, 41-44', 47-50') für die Verpackungen mindestens einen mit der Außenseite der Verpackung in Kontakt zu bringenden Haltekrafterzeuger (22, 23) aufweist.

8. Fördereinrichtung nach Anspruch 7, **dadurch gekennzeichnet, dass** der Haltekrafterzeuger (22, 23) ein einen Minderdruck an der Verpackungsaußenseite erzeugender Sauger ist.

9. Fördereinrichtung nach einem der Ansprüche 4 bis 8, **dadurch gekennzeichnet, dass** jede Aufnahme (17-20, 41-44', 47-50') für die Verpackungen zumindest einen Sensor zur Detektion einer Verpackung (9) versehen ist.

10. Fördereinrichtung nach einem der Ansprüche 4 bis 9, **dadurch gekennzeichnet, dass** mindestens eine der Aufnahmen (17-20, 41-44', 47-50') in ihrer Arbeitshöhe verstellbar ausgebildet ist.

11. Vorrichtung zum Handhaben von Verpackungen mit zumindest einer Magazinstation für die Verpackungen, mit wenigstens einer Füllstation zum Befüllen der Verpackungen mit einem Füllgut, mit mindestens einer Station zum Verschließen der befüllten Verpackungen und wenigstens einer Entnahmestation für die verschlossenen Verpackungen, und mindestens einer Fördereinrichtung für die von Station zu Station zu fördernden Verpackungen,
**dadurch gekennzeichnet,**
**dass** die Fördereinrichtung (8, 30, 31) ein Förderorgan (10, 38, 38') mit einer Vielzahl von in Förderrichtung feststehenden Verpackungshaltern (11, 12, 39, 39', 40, 40') aufweist, wobei zumindest jeder der Stationen (3-7, 33-36') mindestens einer der Verpackungshalter (11, 12, 39, 39', 40, 40') zugeordnet ist, und
**dass** jeweils zwei einander benachbarten Verpackungshaltern (11, 12, 39, 39', 40, 40') ein zwangsbewegter Umsetzer (13, 14, 45, 45', 46, 46') für die zu fördernden Verpackungen (9) zugeordnet ist, welcher zwischen den feststehenden Verpackungshaltern (11, 12, 39, 39', 40, 40') entlang einer vorgegebenen Bahn bewegbar ist.

12. Vorrichtung nach Anspruch 11, **gekennzeichnet durch** wenigstens zwei Fördereinrichtungen (30, 31), deren Förderorgane (38, 38') etwa parallel zueinander verlaufende Förderrichtungen aufweisen.

13. Vorrichtung nach Anspruch 11 oder 12, **dadurch gekennzeichnet, dass** die zwangsbewegten Umsetzer (45, 45', 46, 46') der verschiedenen Förderorgane (38, 38') derart zueinander angeordnet sind, dass ein Versatz in den Bewegungsabläufen ausgebildet ist.

14. Vorrichtung nach einem der Ansprüche 11 bis 13, **dadurch gekennzeichnet, dass** jeder Fördereinrichtung (31, 32) jeweils vorbestimmte, die Verpackungen (9) bearbeitende, funktionsgleiche Stationen (33-36') zugeordnet sind.

15. Vorrichtung nach Anspruch 14, **dadurch gekennzeichnet, dass** funktionsgleiche Stationen (33-36') in Förderrichtung des jeweiligen Förderorgans (38, 38') versetzt zueinander angeordnet sind.

16. Vorrichtung nach einem der Ansprüche 11 bis 15, **dadurch gekennzeichnet, dass** den Fördereinrichtungen (31, 32) ein gemeinsames Magazin zugeordnet ist.

## Claims

1. A conveyor device for packages, in particular tobacco pouches, with at least one conveyor member holding at least one package in a predetermined position,
**characterized in that**
the conveyor member (10, 38, 38') has at least two package holders (11, 12, 39, 39', 40, 40') which are fixed in the conveying direction, and at least one relocator (13, 14, 45, 45', 46, 46') for the packages (9) which are to be conveyed, wherein the relocator (13, 14, 45, 45', 46, 46') is equipped with at least one drive means for a positively driven movement between the fixed package holders (11, 12, 39, 39', 40, 40') along a predetermined path.

2. The conveyor device according to Claim 1, **characterized in that** a positively moved relocator (13, 14, 45, 45', 46, 46') is respectively associated with two package holders (11, 12, 39, 39', 40, 40') immediately adjacent to one another.

3. The conveyor device according to Claim 1 or 2, **characterized in that** each package holder (11, 12, 39, 39', 40, 40') and each relocator (13, 14, 45, 45', 46, 46') is equipped with at least two mounts (17-20, 41-44', 47-50') for respectively a package (9).

4. The conveyor device according to one of Claims 1 to 3, **characterized in that** at least one of the relocators (13, 14, 45, 45', 46, 46') has at least one slide (16) which is received via a linear guide (15, 52, 52').

5. The conveyor device according to Claim 4, **characterized in that** each mount (17-20, 41-44', 47-50') is held movably by means of a sliding guide (21, 53, 53', 54, 54') in a horizontal plane and approximately transversely to the conveying direction of the packages (9).

6. The conveyor device according to one of Claims 4 or 5, **characterized in that** the mounts (17-20, 41-44', 47-50') for the packages are coupled with a drive member for a displacement movement in the direction of the sliding guide (21).

7. The conveyor device according to one of Claims 4 to 6, **characterized in that** each mount (17-20, 41-44', 47-50') for the packages has at least one holding force generator (22, 23) which is to be brought into contact with the exterior of the package.

8. The conveyor device according to Claim 7, **characterized in that** the holding force generator (22, 23) is a suction apparatus generating a low pressure on the exterior of the package.

9. The conveyor device according to one of Claims 4 to 8, **characterized in that** each mount (17-20, 41-44', 47-50') for the packages is provided with at least one sensor for the detection of a package (9).

10. The conveyor device according to one of Claims 4 to 9, **characterized in that** at least one of the mounts (17-20, 41-44', 47-50') is constructed so as to be adjustable in its operating height.

11. An apparatus for the handling of packages with at least one magazine station for the packages, with at least one filling station for the filling of the packages with a filling material, with at least one station for closing the filled packages and at least one removal station for the closed packages, and at least one conveyor device for the packages which are to be conveyed from station to station,
**characterized in that**
the conveyor device (8, 30, 31) has a conveyor member (10, 38, 38') with a plurality of package holders (11, 12, 39, 39', 40, 40') which are fixed in the conveying direction, wherein at least one of the package holders (11, 12, 39, 39', 40, 40') is associated with at least each of the stations (3-7, 33-36'), and
that respectively a positively moved relocator (13, 14, 45, 45', 46, 46') for the packages (9) which are to be conveyed is associated respectively with two package holders (11, 12, 39, 39', 40, 40') adjacent to one another, which relocator is movable between the fixed package holders (11, 12, 39, 39', 40, 40') along a predetermined path.

12. The apparatus according to Claim 11, **characterized by** at least two conveyor devices (30, 31), the conveyor members (38, 38') of which have conveying directions running approximately parallel to one another.

13. The apparatus according to Claim 11 or 12, **characterized in that** the positively moved relocators (45, 45', 46, 46') of the various conveyor members (38, 38') are arranged with respect to one another such that a displacement is developed in the movement sequences.

14. The apparatus according to one of Claims 11 to 13, **characterized in that** respectively predetermined functionally identical stations (33-36') processing the packages (9) are associated with each conveyor device (31, 32).

15. The apparatus according to Claim 14, **characterized in that** functionally identical stations (33-36') are arranged offset with respect to one another in the conveying direction of the respective conveyor member (38, 38').

16. The apparatus according to one of Claims 11 to 15, **characterized in that** a shared magazine is associated with the conveyor devices (31, 32).

## Revendications

1. Dispositif de transport pour emballages, en particulier pour sachets de tabac, comprenant au moins un organe de transport tenant au moins un emballage dans une position prédéfinie,
**caractérisé en ce que**
l'organe de transport (10, 38, 38') présente au moins deux supports d'emballage (11, 12, 39, 39', 40, 40') stationnaires dans le sens de transport et au moins un envoyeur (13, 14, 45, 45', 46, 46') pour les emballages (9) à transporter, sachant que l'envoyeur (13, 14, 45, 45', 46, 46') est doté d'au moins un moyen d'entraînement pour un mouvement dirigé de manière forcée entre les supports d'emballage stationnaires (11, 12, 39, 39', 40, 40') le long d'une voie prédéfinie.

2. Dispositif de transport selon la revendication 1, **caractérisé en ce que** deux supports d'emballage (11, 12, 39, 39', 40, 40') voisins directement l'un de l'autre, ont chacun un envoyeur (13, 14, 45, 45', 46, 46') déplacé de manière forcée.

3. Dispositif de transport selon la revendication 1 ou 2, **caractérisé en ce que** chaque support d'emballage (11, 12, 39, 39', 40, 40') et chaque envoyeur (13, 14, 45, 45', 46, 46') est doté d'au moins deux réceptions (17-20, 41-44', 47-50') pour respectivement un emballage (9).

4. Dispositif de transport selon l'une des revendications 1 à 3, **caractérisé en ce qu'**au moins un des envoyeurs (13, 14, 45, 45', 46, 46') présente au moins un chariot (16) qui est reçu sur un guidage linéaire (15, 52, 52').

5. Dispositif de transport selon la revendication 4, **caractérisé en ce que** chaque réception (17-20, 41-44', 47-50') est maintenue mobile via un rail de guidage (21, 53, 53', 54, 54') dans un plan horizontal et environ transversal au sens de transport des emballages (9).

6. Dispositif de transport selon l'une des revendications 4 ou 5, **caractérisé en ce que** les réceptions (17-20, 41-44', 47-50') pour les emballages sont couplées à un organe d'entraînement pour un mouvement de décalage en direction du rail de guidage (21).

7. Dispositif de transport selon l'une des revendications 4 à 6, **caractérisé en ce que** chaque réception (17-20, 41-44', 47-50') pour les emballages présente au moins un générateur de force de fixation (22, 23) à amener en contact avec le côté extérieur de l'emballage.

8. Dispositif de transport selon la revendication 7, **caractérisé en ce que** le générateur de force de fixation (22, 23) est un extracteur produisant une pression de détente sur le côté extérieur de l'emballage.

9. Dispositif de transport selon l'une des revendications 4 à 8, **caractérisé en ce que** chaque réception (17-20, 41-44', 47-50') pour les emballages est dotée d'au moins un capteur pour détecter un emballage (9).

10. Dispositif de transport selon l'une des revendications 4 à 9, **caractérisé en ce qu'**au moins une des réceptions (17-20, 41-44', 47-50') est conçue en étant réglable en hauteur dans sa position de travail.

11. Dispositif pour manipuler des emballages comprenant au moins un poste de magasin pour les emballages, comprenant au moins un poste de remplissage pour remplir les emballages avec une marchandise de remplissage, comprenant au moins un poste pour fermer les emballages remplis et au moins un poste de prélèvement pour les emballages fermés, et au moins un dispositif de transport pour les emballages à transporter de poste en poste,
**caractérisé en ce que**
le dispositif de transport (8, 30, 31) présente un organe de transport (10, 38, 38') comprenant une pluralité de supports d'emballage (11, 12, 39, 39', 40, 40') stationnaires dans le sens de transport, sachant qu'au moins chacun des postes (3-7, 33-36') est attribué à au moins un des supports d'emballage (11, 12, 39, 39', 40, 40'), et
que respectivement deux supports d'emballage (11, 12, 39, 39', 40, 40') voisins l'un de l'autre ont un envoyeur (13, 14, 45, 45', 46, 46') déplacé de manière forcée pour les emballages (9) à transporter, lequel peut être déplacé entre les supports d'emballage stationnaires (11, 12, 39, 39', 40, 40') le long d'une voie prédéfinie.

12. Dispositif selon la revendication 11, **caractérisé par** au moins deux dispositifs de transport (30, 31) dont les organes de transport (38, 38') présentent des sens de transport environ parallèles l'un à l'autre.

13. Dispositif selon la revendication 11 ou 12, **caractérisé, en ce que** les envoyeurs (45, 45', 46, 46') déplacés de manière forcée des différents organes de transport (38, 38') sont ainsi disposés les uns par rapport aux autres qu'un décalage est produit dans les tracés de déplacement.

14. Dispositif de transport selon l'une des revendications 11 à 13, **caractérisé en ce que** chaque dispositif de transport (31, 32) a des postes (33-36') prédéfinis, de même fonction, traitant les emballages (9).

15. Dispositif selon la revendication 14, **caractérisé en ce que** des postes (33-36') de même fonction sont disposés en étant décalés entre eux dans le sens de transport de l'organe de transport (38, 38') respectif.

16. Dispositif de transport selon l'une des revendications 11 à 15, **caractérisé en ce que** les dispositifs de transport (31, 32) ont un magasin commun.
